# EUROPÄISCHE PATENTANMELDUNG

(11) **EP 2 043 004 A1**
(43) Veröffentlichungstag der Anmeldung: **01.04.2009**
(21) Anmeldenummer: 07018678.8
(22) Anmeldetag: 24.09.2007
(51) Int. Cl.: G06F 17/30

(54) **Datenbanksystem und Verfahren zum Aufnehmen, Speichern und Ausgeben von Datensätzen**

(71) Anmelder: Bode, Martin, 31085 Everode (DE); List, Ralf, 52066 Aachen (DE)
(72) Erfinder: Bode, Martin, 31085 Everode (DE)
(74) Vertreter: Bremer, Ulrich

(57) **Zusammenfassung**

Die Erfindung betrifft ein Datenbanksystem, das aufweist:
eine Datenbank zum Aufnehmen, Speichern und Ausgeben von Buch-Datensätzen (BDS) und Suchbegriff-Datensätzen (SBDS), denen ein Suchbegriff-Tupel ((SB1, SB2 ...)) aus mehreren Suchbegriff-Feldern in jeweils einer Suchsprache (S1, S2...) zugeordnet ist,
wobei jeder Suchbegriff-Datensatz (SBDS) in mindestens einem Suchbegriff-Feld einen Suchbegriff-Wert aufweis und Zuordnungen (L) zwischen Buch-Datensätzen und Suchbegriff- Datensätzen vorgesehen sind,
ein Datenbank-Managementsystem (DBMS), das mindestens aufweist:
eine Eingabe-Schnittstelle (3) zur Eingabe von Buch- Eingabedatensätzen und Suchbegriff-Eingabedatensätzen über ein Computer-Netzwerk,
eine Suchabfrage-Schnittstelle (4) zur Eingabe eines Suchabfrage-Datensatzes (SADS) und zur Ausgabe einer Trefferliste (10) mit zu dem Suchabfrage-Datensatz ermittelten Buch-Datensätzen (BDS) über das Computer-Netzwerk,

wobei das Datenbank-Managementsystem (DBMS) bei Eingabe eines Suchabfrage-Datensatzes dessen Suchabfrage-Werte mit Suchbegriff-Werten in den Suchbegriff-Feldern der gespeicherten Suchbegriff-Datensätze vergleicht und bei Ermittlung einer Übereinstimmung eines Suchabfrage-Wertes mit einem Suchbegriff-Wert zu dem ermittelten Suchbegriff-Datensatz die zugeordneten Buch-Datensätze ermittelt und eine Trefferliste (10) mit Angaben zu den ermittelten Buch-Datensätzen ausgibt.

## Beschreibung

Die Erfindung betrifft ein Datenbanksystem und. ein Verfahren zum Aufnehmen, Speichern und Ausgeben, vorzugsweise auch Verarbeiten, von Datensätzen und Daten, insbesondere Suchbegriffen, in einem Datenbanksystem, wobei das erfindungsgemäße Verfahren insbesondere ein Verfahren zum Betreiben des erfindungsgemäßen Datenbanksystems sein kann.

Eine Recherche oder Suche in einem Internet bzw. in einem Rechnerverbundnetzwerk erfolgt im Allgemeinen über spezifische Programme bzw. Suchmaschinen; bei einer Suche im World Wide Web werden hierfür im allgemeinen Websuchmaschinen eingesetzt. Ein Benutzer gibt Suchbegriffe ein, zu denen nachfolgend im Internet bzw. dem Computernetzwerk Dokumente vorgegebener Dokumenttypen auf Übereinstimmungen oder gegebenenfalls auch Ähnlichkeiten bei vorgegebenen Ähnlichkeitskriterien untersucht und die gefundenen Treffer bzw. ermittelten Dokumente nachfolgend in einer Liste angezeigt werden. Bei derartigen Suchen werden zum Teil unterschiedliche Suchbegriffe oder Einschränkungen nach vorgegebenen Kategorien eingegeben, z. B. Branchen, Schlüsselwörtern usw. Hierbei kann bei einigen Suchmaschinen die Suche auf Treffer in spezifischen Sprachen eingeschränkt werden.

Es zeigt sich jedoch, dass derartige Suchverfahren und Suchmaschinen sehr unspezifisch sind und bei einer Suche eine Vielzahl von Treffern anzeigen, zum Teil deutlich über 10.000 oder 100.000 Treffer, die in einer Folge von Trefferseiten angezeigt werden. Hierbei wird zum Teil nach internen Kriterien eine Ordnung nach Relevanz durchgeführt, so dass relevante Treffer auf den ersten Seiten erscheinen sollen.

Ein Benutzer wird in vielen Fällen eventuell die ersten Treffer detaillierter angucken und nach Studium einer begrenzten Trefferanzahl auf die Durchsicht der weiteren Treffer verzichten. Es zeigt sich weiterhin auch, dass die Trefferauswahl in vielen Fällen nicht zu den relevantesten Ergebnissen führt, wobei insbesondere werden aufgrund sprachlicher Vieldeutigkeit unrelevante Dokumente angezeigt und relevante Dokumente bei Verwendung anderer Synonyme oder anderer Sprachen nicht entdeckt werden.

Braunchenverzeichnisse ermöglichen eine Katalogisierung und Kategorisierung von verschiedenen angebotenen Diensten in einer hierarchischen Form, wobei Inserenten eigene Identitätsangaben und gegebenenfalls weitere Suchbegriffe oder Textangaben als Datensätze eintragen können. Eine Abfrage der eingegebenen Datensätze durch einen suchenden Benutzer kann nachfolgend über die Hierarchiestruktur oder durch Eingabe eines Suchbegriffs in einer Suchmaschine erfolgen. Allerdings sind die Möglichkeiten derartige Branchenverzeichnisse und anderer hierarchisch strukturierter Verzeichnissysteme begrenzt.

Der Erfindung liegt die Aufgabe zugrunde, ein Datenbanksystem und ein Verfahren zum Betreiben eines Datenbanksystems zu schaffen, mit denen eine umfassende Suche mit relativ geringem Aufwand möglich ist.

Diese Aufgabe wird durch ein Datenbanksystem nach Anspruch 1 und ein Verfahren nach Anspruch 13 gelöst. Die Unteransprüche beschreiben bevorzugte Weiterbildungen. Hierbei ist ergänzend ein Computerprogramm bzw. Computerprogrammprodukt zur Durchführung des Verfahrens auf einem Computer vorgesehen.

Der Erfindung liegt der Gedanke zugrunde, eine Suche in von Benutzern eingegebenen Datensätzen zu ermöglichen, wobei diese EingabeDatensätze zur Erstellung von Buch-Datensätzen und weiterhin mit den einzelnen Buch-Datensätzen verknüpften bzw. verlinkten Suchbegriff- Datensätzen dienen. Die Buch-Datensätze weisen hierbei ein Buchimpressum und in Kriterien aufgeteilten Daten auf, bzw. es sind den Buch-Datensätzen das Buchimpressum und die in Kriterien aufgeteilten Daten zugeordnet. Die Suchbegriff-Datensätze enthalten jeweils Tupel bzw. Vektoren aus mehreren Feldern, wobei jedem Feld eine vorgegebene Suchbegriffsprache zugeordnet ist, wobei insbesondere sieben Welthandelssprachen vorgegeben sein können wie Deutsch, Englisch, Arabisch, Französisch, Spanisch, Portugiesisch und Russisch. Hierbei weist ein Suchbegriff-Datensatz in mindestens einem Feld einen Suchbegriff-Wert auf, die anderen Felder können frei bzw. nicht belegt sein. Falls mehrere Felder belegt sind, bilden die den unterschiedlichen Suchbegriff-Sprachen zugeordneten Suchbegriff-Werte somit Übersetzungen bzw. Synonyme zu einander.

Eine Suche bzw. eine Abfrage erfolgt durch Eingabe eines Suchabfrage-Datensatzes eines Benutzers über das Computernetzwerk bzw. Internet. Der Benutzer gibt in eine Abfragemaske die Suchabfrage-Datensätze ein, die jeweils gebildet werden als Tupel aus Suchabfrage-Datenwerten in den verschiedenen Sprachen. Hierbei ist grundsätzlich die Eingabe eines einzigen Suchabfrage- Datenwertes in einer Sprache hinreichend, so dass das Datenbank-Managementsystem bzw. die Suchmaschine hieraus nachfolgend einen Suchabfrage-Datensatz als Tupel mit einer entsprechenden Anzahl von Leerstellen bildet.

Erfindungsgemäß wird eine Ermittlung auf Übereinstimmung eines eingegebenen Suchabfrage-Datensatzes mit den gespeicherten Suchbegriff-Datensätzen durchgeführt. Eine Übereinstimmung kann erfindungsgemäß insbesondere als Identität definiert sein, gegebenenfalls aber auch eine Übereinstimmung bezüglich vorgegebener Vergleichskriterien wie z. B. Trunkation, Beugung und Dehnung (Konjugation, Deklination) sein.

Gemäß einer erfindungsgemäß besonders bevorzugten Ausführungsform können mehrere gespeicherte Suchbegriff-Datensätze zu einem Abgleich über mehrere Felder bzw. Sprachen verwendet werden. Hierbei wird erfindungsgemäß erkannt, dass die verschiedenen eingegebenen Suchbegriff-Datensätze Einträge in unterschiedlichen Kombinationen von Feldern haben können, z. B. bei ein erster Suchbegriff-Datensatz mit Einträgen in dem ersten und zweiten Feld entsprechend z. B. Deutsch und Englisch, wenn ein Benutzer zu einem Begriff diese Übersetzungen kannte, ein weiterer Suchbegriff- Datensatz zu dem gleichen Begriff den ersten und dritten bzw. Englischen und Arabischen Eintrag. Das erfindungsgemäße Verfahren bzw. das erfindungsgemäße Datenbank- Managementsystem können nunmehr über eine mehrfache Ermittlung bzw. durch ein iteratives Verfahren auf übereinstimmende Suchbegriff-Werte über alle Felder hinweg eine selbsttätige Ergänzung durchführen, durch die eine Zuordnung in einer hohen Anzahl von Sprachen ermöglicht wird.

Wenn bei dem erfindungsgemäßen iterativen Verfahren somit eine Übereinstimmung eines Suchabfrage-Datenwertes mit einem Suchbegriff-Wert ermittelt wird, werden aus dem als Treffer ermittelten Suchbegriff-Datensatz Suchbegriff-Werte auch der anderen Felder bzw. Sprache herangezogen und für die iterativ nachfolgende weitere Ermittlung auf Übereinstimmung in den weiteren Suchbegriff-Datensätzen herangezogen werden. Insbesondere bei einer hinreichenden Anzahl gespeicherter Suchbegriff-Datensätze ist somit eine vernetzte Suche möglich, bei der iterativ eine Vielzahl von Treffern möglich ist.

Das erfindungsgemäße iterative Verfahren kann auch während der Eingabe eines Suchabfrage-Datensatzes durchgeführt werden, so dass dem Benutzer nach Eingabe eines Suchabfrage-Wertes Vorschläge von Suchabfrage-Werten in weiteren Feldern angeboten werden, die er übernehmen oder nicht übernehmen kann.

Die Zuordnung von Synonymen bzw. Übersetzungen in anderen Sprachen schafft hierbei auch eine Eindeutigkeit in der Begriffszuordnung, die in einer einzelnen Sprache nicht direkt möglich ist. Ein mehrdeutiges Wort in einer Sprache wie z. B. "Laster" oder "Schloss" wird in zumindest einer weiteren Sprache nicht die gleiche Mehrdeutigkeit aufweisen. Somit wird der erfindungsgemäß als Tupel gebildete und gespeicherte Suchbegriff-Datensatz bzw. bereits der bei der Suchabfrage zu bildende Suchabfrage-Datensatz eine Eineindeutigkeit aufweisen können. Erfindungsgemäß kann somit eine Zuordnung zu einer Gruppe von gespeicherten Suchbegriff-Datensätzen erfolgen, die als gleich bzw. gleichartig erkannt werden und einer gemeinsamen Identifikation zugeordnet werden. Somit wird eine Datenbanksprache gebildet, die universell einem Begriff in verschiedenen Sprachen einen eindeutigen Wert zuordnet; erfindungsgemäß kann somit eine universelle Sprachzuordnung bzw. Sprache aus diesen Identifikationen bzw. Codes gebildet werden.

Die Erfindung wird im Folgenden anhand der beiliegenden Zeichnungen an einer Ausführungsform erläutert. Es zeigen:
- Fig. 1: ein Blockdiagramm des erfindungsgemäßen Datenbanksystems;
- Fig. 2: eine Eingabemaske zur Eingabe eines Bucheintrag-Datensatzes;
- Fig. 3: eine Eingabemaske für eine Suchanfrage zur Suche in dem Datenbanksystem;
- Fig. 4: eine Ausgabemaske zur Anzeige und Auswahl von auf eine Suchanfrage ermittelten Treffern;
- Fig. 5: das Computer-Netzwerk mit dem Datenbanksystem.

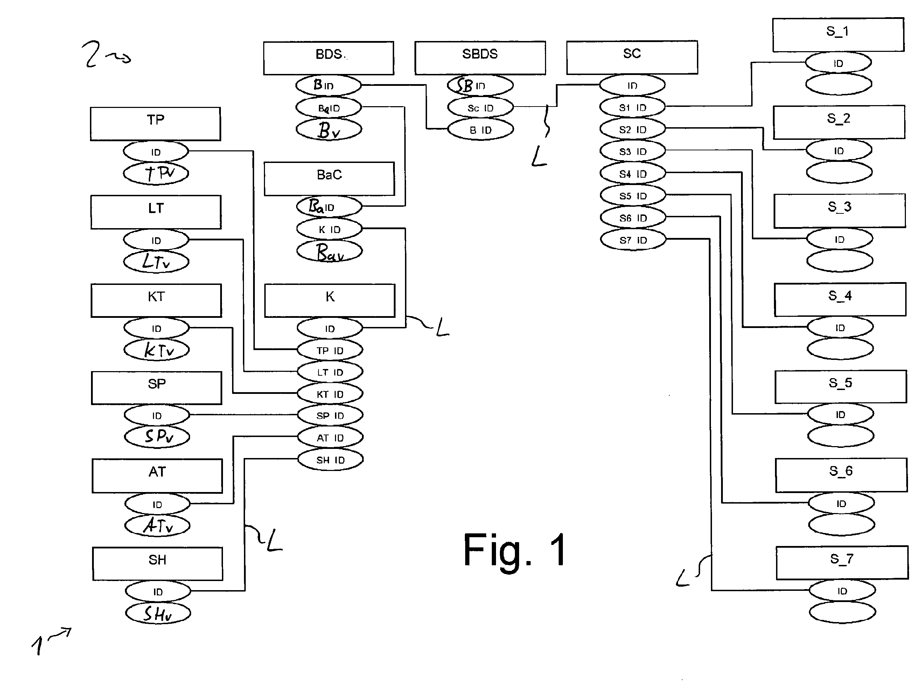

Das in Fig. 1 dargestellte Datenbanksystem 1 weist in an sich bekannter Weise eine Datenbank 2 auf, die z.B. als relationale Datenbank ausgebildet ist. Grundsätzlich sind auch andere Datenbanktypen wie z.B. ein objektorientiertes Datenbanksystem möglich. Die Verwaltung der Datenbank erfolgt über ein Datenbank-Managementsystem DBMS. Die gezeigten Linien zwischen den Blöcken entsprechen Verknüpfungen, wobei die Verknüpfungen jeweils zu den betreffenden Identifkationen gezeigt sind.

In der Datenbank 2 sind verschiedene Datensätze gespeichert, die gemäß den nachfolgenden Ausführungen eingegeben, geändert und bei Suchabfragen genutzt werden können.

In der Datenbank 2 sind verschiedene Buchdatensätze BDS1, BDS2, ... gespeichert, d.h. BDS mit i=1, 2,... als natürliche Zahl. Jeder Buchdatensatz BDS beinhaltet eine eindeutige Buchidentifikation BID, weiterhin eine Verknüpfung L zu einem Funktionscode BaC und einen Wert Bv.

Jeder Funktionscode BaC weist auf: seine Funktionsidentifikation BalD, eine Verknüpfung zu einem Kriterien-Datensatz KDS und den Code bzw. Wert Bav.

Die Kriterien-Datensätze KDS weisen jeweils auf eine Kriterienidentifikation KID und Verknüpfungen zu sechs Kriterien, gemäß dieser Ausführungsform Typ TP, Land LP, Kategorie KT, Sprache ST, Art AT und Geschäftsbetrieb bzw. Shop SH.

Hierbei ist wiederum jedes der Kriterien durch seine betreffende Identifikation und den jeweiligen Wert TPv, LTv, KTv, SPv, ATv, SHv gekennzeichnet.

Suchbegriff-Datensätze SBDS weisen jeweils eine Suchbegriffidentifikation SBID und Verknüpfungen zu einem Sprach-Code Sc und einem Buch-Datensatz BDS auf.

Der Sprachcode SC weist seine Sprachcodeidentifikation ScID und sieben Verknüpfungen S1 ID bis S7 ID auf entsprechende Spracheinträge in den sieben Sprachen S_1, S_2, S_3, S_4, S_5, S_6, S_7 auf, die z.B. Deutsch, Englisch, Arabisch, Französisch, Spanisch, Portugiesisch und Russisch sein können. In jeder dieser sieben Sprachen ist der Sprachidentifikation S1ID, S2ID, S3ID,...S7ID jeweils einen Wert, z.B. in der Sprache SP1 der Wert "Car" in der Sprache SP2 der Wert "Auto" und so weiter zugeordnet. Diese Werte stellen somit durch die Verknüpfungen ein Tupel (bzw. Vektor) mit sieben Feldern für den Suchbegriff-Datensatz SBDS dar, wobei in jedem Feld jeweils ein Suchbegriff-Wert aufgenommen ist.

Den Büchern bzw. Buchdatensätzen BDS ist erfindungsgemäß ein Funktionscode BaC als fester Wert zugeordnet, der auch bei nachträglicher Änderung der Kriterien nicht geändert wird. Somit sind spätere Änderungen und Ergänzungen möglich, die z.B. durch Eingabe zusätzlicher Werte, durch Korrekturen oder auch durch eine Ergänzung der Anzahl der Kriterien erfolgen kann.

Der Funktionscode BaC ist vorteilhafterweise als eine fortlaufende Zahl ausgebildet, die aus der festen Funktions-ID BalD und der Kriterien-ID besteht.

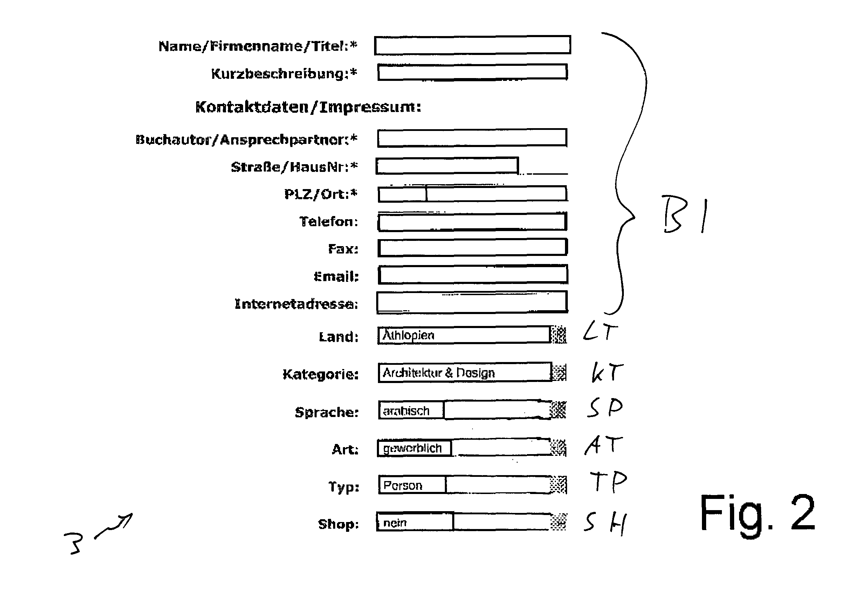

Fig. 2 zeigt eine Eingabemaske 3 als Eingabe-Schnittstelle zum Anlegen eines Bucheintrages. Der vom Benutzer einzugebende Eingabedatensatz enthält z.B. Angaben Name/Firmenname/Titel, Kurzbeschreibung, Kontaktdaten/Impressum, Buchautor, Ansprechpartner, Straße/HausNr, PLZ/Ort, Telefon, Fax, Email, Internetadresse, Land, Kategorie, Sprache, Art, Typ, Shop. Vorteilhafterweise werden hierbei die ersten neun Daten des einabedatensatzes vom Benutzer frei eingegeben, wobei ein Teil Pflichtfelder sind. Die nachfolgenden fünf Felder (Land, Kategorie, Sprache, Art, Typ, Shop) sind mit verschiedenen Werten vordefiniert, z.B. unter Angabe verschiedener Länder oder verschiedener Kategorien, wie "Architektur & Design, Erfindung, Freizeit, Kultur, Sport, Kunst,....", weiterhin der Angabe verschiedener Sprachen, der Art, d.h. gewerblich, privat, gemeinnützig", der dem Typ "Person, Produkt, Firma, Verein, Behörde, Regierung" und der Angabe zum Shop: "Ja, Nein". Der Benutzer sucht somit jeweils einen der fest eingegebenen Werte aus.

Durch Eingabe dieses Eingabedatensatzes wird von dem erfindungsgemäßen Datenmanagementsystem ein Buchdatensatz BDS gebildet. Das Buch ist durch seine Buch-ID BID eindeutig gekennzeichnet. Aus den eingegebenen Daten wird hierbei ein Buchimpressum BI gebildet

Von den Benutzer werden direkt beim Anlegen des Bucheintrages in der Maske von Fig. 2, oder auch zu einem späteren Zeitpunkt nachfolgend die mit seinem Buch verknüpften Suchbegriffe eingegeben, aus denen der Suchbegriff-Datensätze gebildet werden, die mit seinem Buch bzw. Buchdatensatz verknüpft sind. Hierbei kann der Benutzer zu jedem Suchbegriff, der jeweils ein einziges Wort oder auch eine Wortfolge sein können, in einer oder mehreren Sprachen einen Suchbegriff-Wert in das betreffende Feld eingeben. Die Sprachen S_1 bis S_7 sind hierbei gemäß Fig. 1 vorgegeben. Der Suchbegriffeingabe wird eine Verknüpfung bzw. Verlinkung zu der betreffenden Buchidentifikation BID und eine Verknüpfung zum Sprachcode Sc zugeordnet, wobei hierbei gegebenenfalls in dem gezeigten Beispiel ein bis sechs Felder vom Benutzer freigelassen sein können, d.h. kein Wert zugeordnet ist.

Erfindungsgemäß sind somit die Sprachcodes mit den verschiedenen Werten in den jeweiligen Sprachen getrennt von den Buchdatensätzen abgespeichert und über die Verlinkung über die Suchbegriffe verbunden.

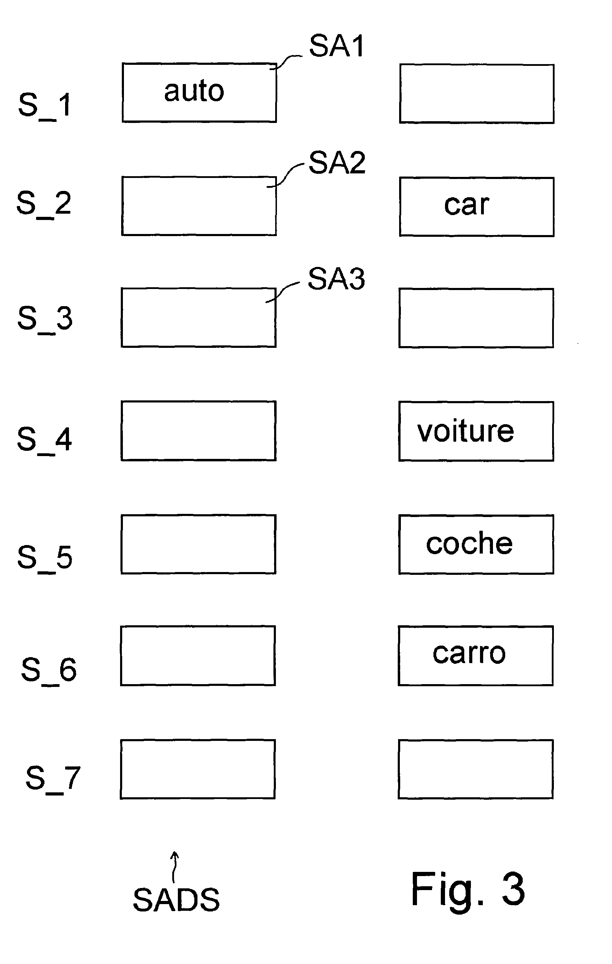

Fig. 3 zeigt die Eingabemaske 4 zur Eingabe der Suchbegriffe, die als erfindungsgemäße Suchabfrage-Schnittstelle 4 aufgefasst werden kann, wobei die Eingabe eines Suchbegriffs gezeigt ist. Dem Benutzer werden vorteilhafterweise bereits bei der Eingabe des Suchabfrage-Wertes in ein Feld entsprechende als zugehörig erkannte Übersetzungen oder Synonyme in den anderen Feldern, d.h. anderen Sprachen, zur Übernahme angeboten. Wenn der Benutzer wie gezeigt einen Wert in der Sprache S_1 (Deutsch), z.B. "Auto" eingibt, kann das Datenmanagementsystem in den abgespeicherten Suchbegriff-Datensätzen nach Synonymen in den anderen sechs Sprachen suchen und den Benutzer optional anbieten, z. B. car, voiture, cache, carro.

Hierdurch können mögliche Mehrdeutigkeiten des eingegebenen Wertes bzw. Begriffs, die in der von ihm eingegebenen Sprache bestehen können, beseitigt oder reduziert werden, wenn diese Synonyme nicht in den anderen Sprachen entsprechend existieren.

Das Datenbankmanagementsystem sucht nachfolgend auf Übereinstimmung des eingegebenen Wertes oder der eingegebenen Werte in den abgespeicherten Sprachdatensätzen bzw. Sprachcodes, nachfolgend die hiermit verlinkten bzw. verknüpften Bücher bzw. Buchdatensätze und zeigt diese dem Benutzer als Trefferliste an. Eine Übereinstimmung kann bei Identität oder auch bei Erfüllen von Ähnlichkeitskriterien, z. B. mittels Trunkation, vorliegen.

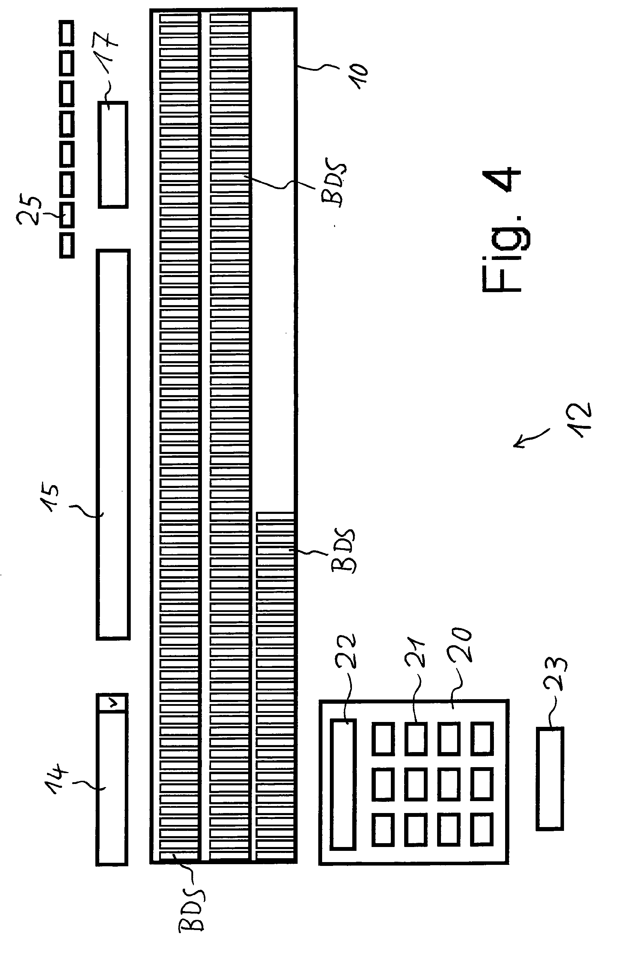

Hierbei kann dem suchenden Benutzer gegebenenfalls nachfolgend jeweils ein Teil der Daten der ermittelten Buch-Datensätze BDS angezeigt werden, damit er eine Vorauswahl treffen kann, bevor er die Buch- Datensätze BDS vollständig herunter lädt. Fig. 4 zeigt hierzu eine Ausgabemaske 12, über die dem Benutzer die ermittelten Buch-Datensätze BDS als Bücher in einem die Trefferliste 10 darstellenden Bücherregal 10 angezeigt werden, wobei z. B. jeder ermittelte Buch-Datensatz BDS gleichwertig als Buch in dem Bücherregal 10 gezogen werden kann. Somit kann auf einer Darstellung bzw. einer einseitigen Ausgabemaske 12 eine hohe Anzahl von Treffern gleichwertig angezeigt werden. Die Auswahl jedes Buch-Datensatzes BDS bzw. Buchs BDS kann z. B. durch Anklicken oder Doppelklick des betreffenden Buch-Datensatzes BDS erfolgen. Hierdurch wird dem Benutzer der Buch-Datensatz oder aber zunächst ein Teil des Buch- Datensatzes BDS, z. B. das Buchimpressum und/oder einige weitere Angaben, angezeigt.

Die Ausgabemaske 12 kann nach Eingabe des Suchabfrage- Datensatzes SADS in die Eingabemaske 4 nachfolgend ausgegeben werden; sie kann als eine weitere Schnittstelle 12, d.h. Anzeige-Schnittstelle 12 ausgebildet sein. Sie kann aber bereits auch die in Fig. 3 gezeigte Suchabfrage-Engabemaske 4 selbst darstellen, so dass eine gemeinsame Schnittstelle für die Suchabfrage und die Ausgabe vorgesehen ist.

Die in der Ausgabemaske 12 gezeigten Symbole der Buch-Datensätze BDS können mit unterschiedlichen Merkmalen gestaltet sein, z. B. mit unterschiedlichen Farben und/oder Form und/oder Größe, um die Unterscheidbarkeit zu erhöhen. Hierbei können diese Merkmale grundsätzlich auch bestimmte Eigenschaften der Buch-Datensätze wiedergeben.

In Fig. 4 ist weiterhin ein Auswahlfeld 14 zur Sprachauswahl, ein Eingabefeld 15 zur Eingabe eines Wertes, der nachfolgend dem betreffenden Suchabfragefeld SA1 bis SA7 aus Fig. 3 zugeordnet wird und ein Startfeld 16 zum Starten der Suchabfrage vorgesehen sein. Ergänzend können Felder 25 zur Anzeige und/oder auch Auswahl von Sprachen als Symbole, z. B. Flaggen vorgesehen sein. Weiterhin ist z. B. ein Eingabefeld 20 zum direkten Eingeben der Funktionsidentifikation BaC über z. B. Zifferntasten 21 und ein Anzeigefeld 22 sowie ein Startfeld 23 zum Starten der Funktionsidentifikations-Suche gezeigt, so dass auf einer Maske 12 eine geordnete Übersicht mit relativ wenigen Bedienfeldern geschaffen ist, die dennoch eine vollständige Suche und übersichtliche Ausgabe einer hohen Anzahl von Treffern ermöglicht.

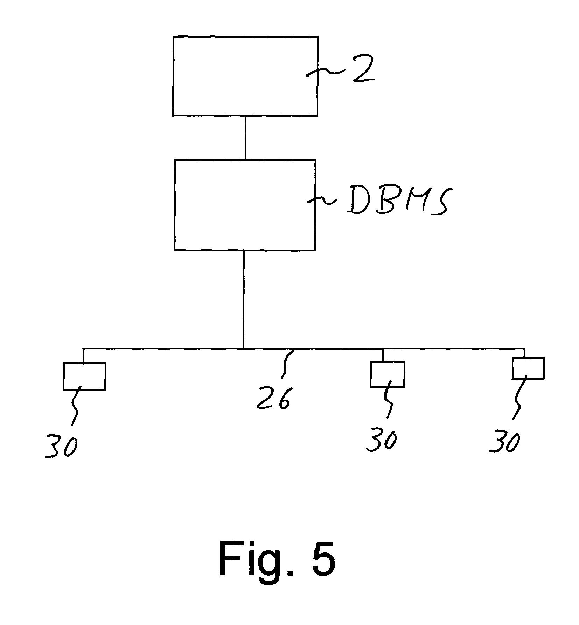

Fig. 5 zeigt das Computernetzwerk 26 bzw. Internet 26 mit der Datenbank 2, dem Datenbank-Managementsystem DBMS und als Schnittstellen dienenden Rechnern 30, die wahlweise als Eingabe-Schnittstelle 3 und/oder Suchabfrage-Schnittstellen 4 dienen können.

## Patentansprüche

1. Datenbanksystem, das mindestens aufweist:
eine Datenbank zum Aufnehmen, Speichern und Ausgeben von
- Buch-Datensätzen (BDS), die jeweils eine Buchidentifikation (BID) aufweisen und denen jeweils Kriterien-Datensätze (KDS) zugeordnet sind, und
- Suchbegriff-Datensätzen (SBDS), die jeweils eine Suchbegriff-Identifikation (SBID) aufweisen und denen ein Suchbegriff-Tupel ((SB1, SB2, SB3, SB4, SB5, SB6, SB7)) aus mehreren Suchbegriff-Feldern (SB1, SB2, SB3, SB4, SB5, SB6, SB7) in jeweils einer Suchsprache (S1, S2, S3, S4, S5, S6, S7) zugeordnet ist,
wobei jeder Suchbegriff-Datensatz (SBDS) in mindestens einem Suchbegriff-Feld (SB1, SB2, SB3, SB4, SB5, SB6, SB7) einen Suchbegriff-Wert aufweist, und
wobei Zuordnungen (L) zwischen Buch-Datensätzen und Suchbegriff-Datensätzen (SBDS) vorgesehen sind,
ein Datenbank-Managementsystem (DBMS), das mindestens aufweist:
- eine Eingabe-Schnittstelle (3) zur Eingabe von Buch-Eingabedatensätzen und Suchbegriff-Eingabedatensätzen über ein Computer-Netzwerk, wobei das Datenbank-Managementsystem (DBMS) aus einem Buch-Eingabedatensatz mindestens einen Buch-Datensatz (BDS) mit einer Buchidentifikation und zugeordneten Kriterien erzeugt und abspeichert und aus einem Suchbegriff- Eingabedatensatz mindestens einen Suchbegriff-Datensatz (SBDS) erzeugt und abspeichert,
- eine Suchabfrage-Schnittstelle (4) zur Eingabe eines Suchabfrage-Datensatzes (SADS), der zumindest einen Suchabfrage-Wert (SA1, SA2, SA3, SA4, SA5, SA6, SA7) aufweist, und zur Ausgabe einer Trefferliste (10) mit zu dem Suchabfrage-Datensatz ermittelten Buch-Datensätzen (BDS) über das Computer-Netzwerk,
wobei das Datenbank-Managementsystem (DBMS) bei Eingabe eines Suchabfrage-Datensatzes (SADS) die Suchabfrage-Werte mit Suchbegriff-Werten in den Suchbegriff-Feldern der gespeicherten Suchbegriff-Datensätze vergleicht und bei Ermittlung einer Übereinstimmung eines Suchabfrage-Wertes mit einem Suchbegriff-Wert zu dem ermittelten Suchbegriff-Datensatz die zugeordneten Buch-Datensätze ermittelt und eine Trefferliste (10) mit Angaben zu den ermittelten Buch-Datensätzen ausgibt.

2. Datenbanksystem nach Anspruch 1, **dadurch gekennzeichnet, dass** das Datenbank-Managementsystem (DBMS) bei Ermittlung eines Suchbegriff- Datensatzes mit einem Suchbegriff-Wert, der mit einem Suchabfrage-Wert eines eingegebenen Suchabfrage-Datensatzes (SADS) übereinstimmt, iterativ jeweils zu den Suchbegriff-Werten der weiteren Suchbegriff-Felder des ermittelten Suchbegriff-Datensatzes übereinstimmende Suchbegriff-Werte in weiteren Suchbegriff-Datensätzen ermittelt.

3. Datenbanksystem nach Anspruch 1 oder 2, **dadurch gekennzeichnet, dass** aus den eingegebenen Suchabfrage-Datensätze jeweils mindestens ein Suchabfrage-Tupel ((SA1, SA2, SA3, SA4, SA5, SA6, SA7)) aus Suchabfrage-Feldern gebildet wird, wobei in mindestens einem Suchabfrage-Feld ein Suchabfrage-Wert vorliegt.

4. Datenbanksystem nach einem der vorherigen Ansprüche, **dadurch gekennzeichnet, dass** eine vorgegebene Anzahl von Suchsprachen (S1, S2, S3, S4, S5, S6, S7) vorliegt und Suchbegriff-Tupel ((SB1, SB2, SB3, SB4, SB5, SB6, SB7)) und vorzugsweise Suchabfrage-Tupel mit einer Anzahl von Feldern gebildet werden, die der Anzahl von Suchsprachen entspricht.

5. Datenbanksystem nach einem der vorherigen Ansprüche, **dadurch gekennzeichnet, dass** die über die Eingabe-Schnittstelle eingegebenen Buch-Eingabedatensätze Buchimpressumdaten (BI) und Kriterien-Datensätze aufweisen.

6. Datenbanksystem nach einem der vorherigen Ansprüche, **dadurch gekennzeichnet, dass** auf eine Übereinstimmung zwischen einem Suchabfrage-Wert und einem Suchbegriff-Wert bei Identität und/oder bei Erfüllen von vorgegebenen Ähnlichkeitskriterien erkannt wird.

7. Datenbanksystem nach einem der vorherigen Ansprüche, **dadurch gekennzeichnet, dass** das Datenbank-Managementsystem (DBMS) bei Eingabe eines Suchabfrage-Datensatzes zunächst zu den eingegebenen Suchabfrage- Datenwerten Übereinstimmungen mit gespeicherten Suchbegriff-Datensätzen sucht und
bei Ermittlung eines Suchbegriff-Datensatzes mit einem übereinstimmenden Suchbegriff-Wert die weiteren Suchbegriff-Werte des Suchbegriff-Datensatzes auf der Suchabfrage-Schnittstelle, vorzugsweise einer Suchabfrage-Maske der Suchabfrage-Schnittstelle als auswählbarer Vorschlag ausgibt.

8. Datenbanksystem nach einem der vorherigen Ansprüche, **dadurch gekennzeichnet, dass** das Datenbank-Managementsystem (DBMS) aus den gespeicherten Suchbegriff-Datensätzen bei einer Übereinstimmung der Suchbegriff-Werte einen gemeinsamen Suchbegriff-Datensatz bildet und dem gemeinsamen Suchbegriff-Datensatz eine eindeutige Suchbegriff-Identifikation zuordnet.

9. Datenbanksystem nach einem der vorherigen Ansprüche, **dadurch gekennzeichnet, dass** ein Buchdatensatz eine Buchidentifikation (BID), ein Buchimpressum (BI) und einen Kriterien-Datensatz mit einer vorgegebenen Anzahl von Kriterien-Datenwerten (TP, LP, KT, SP, AT, SH) aufweist.

10. Datenbanksystem nach einem der vorherigen Ansprüche, **dadurch gekennzeichnet, dass** jedem Buch-Datensatz (BDS) eine Funktionsidentifikation (BaC) zur eindeutigen Identifizierung des Buchdatensatzes und des Kriterien-Datensatzes zugeordnet ist.

11. Datenbanksystem nach einem der vorherigen Ansprüche, **dadurch gekennzeichnet, dass** das Computernetzwerk ein Internet ist.

12. Datenbanksystem nach einem der vorherigen Ansprüche, **dadurch gekennzeichnet, dass** die Trefferliste (10) als Anzeigemaske (12) ausgegeben wird, in der die ermittelten Buch-Datensätze durch Symbole dargestellt sind, die Auswahlfelder zum Abrufen der Buch-Datensätze (BDS) oder Teile der Buch-Datensätze (BDS) darstellen.

13. Verfahren zum Aufnehmen, Verarbeiten, Speichern und Ausgeben von Datensätzen, bei dem
- Buch-Eingabedatensätze und Suchbegriff-Eingabedatensätze über eine Eingabe-Schnittstelle über ein Computer-Netzwerk eingegeben werden,
- aus einem eingegebenen Buch-Eingabedatensatz mindestens ein Buch-Datensatz (BDS) mit einer Buchidentifikation, Buchimpressum-Daten und Kriterien-Datensätzen (KDS) erzeugt und abspeichert wird,
- aus einem eingegebenen Suchbegriff-Eingabedatensatz mindestens ein Suchbegriff-Datensatz (SBDS) erzeugt und abspeichert wird, wobei der Suchbegriff-Datensatz (SBDS) jeweils eine Suchbegriff-Identifikation (SBID) aufweist und ihm ein Suchbegriff-Tupel ((SB1, SB2, SB3, SB4, SB5, SB6, SB7)) aus mehreren Suchbegriff-Feldern (SB1, SB2, SB3, SB4, SB5, SB6, SB7) und in den Suchbegriff-Feldern aufgenommenen Suchbegriff-Werten in jeweils einer Suchsprache (S1, S2, S3, S4, S5, S6, S7) zugeordnet ist.
- wobei Verknüpfungen zwischen den Buch-Datensätzen (BDS) und den Suchbegriff- Datensätzen (SBDS) gebildet und gespeichert werden,
- Suchabfrage-Datensätze über eine Suchabfrage-Schnittstelle und das Computer-Netzwerk eingegeben werden, wobei ein eingegebener Suchabfrage-Datensatz zumindest einen Suchabfrage-Wert (SA1, SA2, SA3, SA4, SA5, SA6, SA7) aufweist,
- zu einem eingegebenen Suchabfrage-Datensatz Übereinstimmungen seiner Suchabfrage-Werte mit gespeicherten Suchbegriff-Werten der Suchbegriff-Datensatz (SBDS) ermittelt und zu den hierbei ermittelten Suchbegriff-Datensatz (SBDS) die verknüpften Buch-Datensätze (BDS) ermittelt werden,
- aus den so ermittelten Buch-Datensätzen (BDS) eine Trefferliste gebildet und über die Suchabfrage-Schnittstelle ausgegeben wird.

14. Verfahren nach Anspruch 13, **dadurch gekennzeichnet, dass** iterativ eine Folge von Ermittlungsverfahren durchgeführt wird, wobei jeweils bei einem ermittelten Suchbegriff-Datensatz (SBDS) mit einem übereinstimmenden Suchbegriff-Wert die weiteren Suchbegriff-Werte des ermittelten Suchbegriff-Datensatzes (SBDS) für eine nachfolgende Suche auf Übereinstimmungen mit Suchbegriff-Werten weiterer Suchbegriff-Datensätze herangezogen werden.

15. Verfahren nach Anspruch 13 oder 14, **dadurch gekennzeichnet, dass** aus den eingegebenen Suchabfrage-Datensätzen jeweils mindestens ein Suchabfrage-Tupel ((SA1, SA2, SA3, SA4, SA5, SA6, SA7)) aus Suchabfrage-Feldern gebildet wird, wobei in mindestens einem Suchabfrage-Feld ein Suchabfrage-Wert vorliegt.

16. Verfahren nach einem der Ansprüche 13 bis 15, **dadurch gekennzeichnet, dass** eine vorgegebene Anzahl von Suchsprachen (S1, S2, S3, S4, S5, S6, S7) verwendet wird und Suchbegriff-Tupel ((SB1, SB2, SB3, SB4, SB5, SB6, SB7)) und vorzugsweise Suchabfrage-Tupel mit einer Anzahl von Feldern gebildet werden, die der Anzahl von Suchsprachen entspricht.

17. Verfahren nach einem der Ansprüche 13 bis 16, **dadurch gekennzeichnet, dass** über die Eingabe-Schnittstelle Buch-Eingabedatensätze mit Buchimpressumdaten und Kriterien-Datensätzen eingegeben werden.

18. Verfahren nach einem der Ansprüche 13 bis 17, **dadurch gekennzeichnet, dass** auf eine Übereinstimmung zwischen einem Suchabfrage-Wert und einem Suchbegriff-Wert bei Identität und/oder bei Erfüllen von vorgegebenen Ähnlichkeitskriterien erkannt wird.

19. Verfahren nach einem der Ansprüche 13 bis 18, **dadurch gekennzeichnet, dass** bei Eingabe eines Suchabfrage-Datensatzes zunächst zu den eingegebenen Suchabfrage- Datenwerten Übereinstimmungen mit gespeicherten Suchbegriff-Datensätzen gesucht werden, und bei Ermittlung eines Suchbegriff-Datensatzes mit einem übereinstimmenden Suchbegriff-Wert die weiteren Suchbegriff-Werte des Suchbegriff-Datensatzes auf der Suchabfrage-Schnittstelle, vorzugsweise einer Suchabfrage-Maske der Suchabfrage-Schnittstelle als auswählbarer Vorschlag ausgegeben werden.

20. Verfahren nach einem der Ansprüche 13 bis 19, **dadurch gekennzeichnet, dass** das Datenbank-Managementsystem (DBMS) aus den gespeicherten Suchbegriff-Datensätzen bei einer Übereinstimmung der Suchbegriff-Werte einen gemeinsamen Suchbegriff-Datensatz bildet und dem gemeinsamen Suchbegriff-Datensatz eine eindeutige Suchbegriff-Identifikation zuordnet.

21. Verfahren nach einem der Ansprüche 13 bis 20, **dadurch gekennzeichnet, dass** die Buch-Datensätze jeweils mit einer Buchidentifikation (BID), Buchimpressum-Daten und einem Kriterien-Datensatz mit einer vorgegebenen Anzahl von Kriterien-Datenwerten (TP, LP, KT, SP, AT, SH) gebildet werden.

22. Verfahren nach einem der Ansprüche 13 bis 21, **dadurch gekennzeichnet, dass** als Computernetzwerk ein Internet verwendet wird, über das die Buch- Eingabedatensätze und Suchbegriff- Eingabedatensätze eingegeben werden und die ermittelten Buch-Datensätze ausgegeben werden.

23. Verfahren nach einem der Ansprüche 13 bis 22, **dadurch gekennzeichnet, dass** jedem Buch-Datensatz eine Funktionsidentifikation (BaC) zur eindeutigen Identifizierung des Buchdatensatzes und der Kriterien zugeordnet wird.

24. Verfahren nach einem der Ansprüche 13 bis 23, **dadurch gekennzeichnet, dass** als Kriterium ein oder mehrere der Elemente der folgenden Gruppe verwendet werden: Typ, Land, Kategorie, Sprache, Art, Shop.

25. Verfahren nach einem der Ansprüche 13 bis 24, **dadurch gekennzeichnet, dass** die Trefferliste (10) als Anzeigemaske (12) ausgegeben wird, in der die ermittelten Buch-Datensätze durch Symbole dargestellt sind, die Auswahlfelder zum Abrufen der Buch-Datensätze (BDS) oder Teile der Buch-Datensätze (BDS) darstellen.

26. Computerprogramm, das computerausführbare Anweisungen zur Durchführung eines Verfahrens nach einem der Ansprüche 13 bis 25 auf einem Computer aufweist.
